# EUROPEAN PATENT APPLICATION

(11) **EP 2 886 891 A1**
(43) Date of publication of application: **24.06.2015**
(21) Application number: 13382535.6
(22) Date of filing: 20.12.2013
(51) Int. Cl.: F16C 32/04, F16C 37/00

(54) **High-performance radial gap superconducting magnetic bearing**

(71) Applicant: Universidad Carlos III de Madrid, 28918 Leganés (ES); Can Superconductors, SRO., 25168 Kamenice Stirin (CZ); Fundação da Facultade de Ciências da Universidade de Lisboa, 1749016 Lisboa (PT)
(72) Inventor: Pérez Díaz, José Luis, 28916 Leganés (ES); Díez Jiménez, Efrén, 28916 Leganés (ES); Valiente Blanco, Ignacio, 28916 Leganés (ES); Sánchez García-Casarrubios, Juan, 28916 Leganés (ES); Cristache, Cristian, 28916 Leganés (ES); Álvarez Valenzuela, Marco, 28916 Leganés (ES); Plechacek, Vladimir, 25168 Kamenice Stirin (CZ); Amorim, Antonio, 1749016 Lisboa (PT); Pato, Nelson, 1749016 Lisboa (PT); Federico, Tiago, 1749016 Lisboa (PT)
(74) Representative: Lorca Melton, Miguel

(57) **Abstract**

A radial gap superconducting magnetic bearing that takes advantage of a high-order multipolar magnetic field with revolution symmetry and at least a superconducting body to establish stable levitation minimizing the amount of superconducting material required, therefore reducing its cost and enhancing the performance of the bearing.

## Description

### Technical Field

The present invention is related to a contactless radial gap superconducting magnetic bearing able to bear both radial and axial forces with enhanced stiffness and reduced cost for use in rotating machinery, as for example flywheel energy storage or power transmission trees.

### Background of the invention

In 1933 Meissner and Ochsenfeld discovered that a superconductor tends to expel an applied magnetic field therefore creating repulsive forces between a superconductor and a magnetic field generator. Stable levitation of a permanent magnet over a high-temperature superconductor was reported by Arkadiev in "A floating magnet" published in 1947.

Since then, plenty of superconducting magnetic mechanisms have been proposed for different applications. For example in WO2013004861 (A1), a long-stroke, contactless nanopositioning mechanism based on superconducting magnetic levitation is claimed. Another example is JPH0544728 (A), where a drive device is claimed provided with permanent magnets and superconductors able to transmit rotational and linear motion in non-contact conditions.

Nevertheless, among all the superconducting magnetic mechanical devices, superconducting bearings are the most common. The inherent stability of levitation, the lack of contact and wear, the extremely low friction and energy losses and the possibility to avoid all tribological problems at high rotation speeds or in cryogenic environments are some of the most significant promising advantages of these bearings. However, the main limitations of the existing superconducting magnetic bearings are the low load capability and low stiffness they exhibit in comparison with other types of bearings such as active magnetic, ball, rollers, cones, needle, hydrostatic or friction bearings. Furthermore, the still high cost of the superconducting materials and the usually required cooling system highly limit their practical use.

Superconducting magnetic bearings can be classified in two main groups regarding the disposition of the gap between the rotor and the stator: axial gap bearings and radial gap bearings. Axial gap bearings -like those described in EP 0559839 (B1), EP 0728956 (B1), WO 95/32541 or in a paper published by Sotelo et al. in 2005 entitled "Halbach array superconducting magnetic bearing for a flywheel energy storage system" - have been typically designed to bear thrust loads, whilst radial gap bearings- see for example US 7659646 (B2)- have been used in cases where radial stiffness is a major issue. Axial gap bearings typically achieve relatively high axial and low radial load capabilities and low stiffness for both axial and radial directions. Radial gap bearings typically present relatively low axial and high radial load capability and relatively high stiffness. However, the said relatively high magnitudes of load capability and stiffness are not high enough to extend the use of this kind of bearings for most practical uses. Particularly, in flywheels for energy storage, the larger the load capability and stiffness of its superconducting magnetic bearing, the larger the energy density that can be stored which is critical for its viability.

The idea of combining axial gap and radial gap bearings into "hybrid gap" bearings was proposed by Nagaya et al. in 2003 in a paper entitled "Development of the composite superconducting magnetic bearing for superconducting flywheel". The authors report an enhancement of the load capability and the radial stiffness of the resulting bearing. In Nagaya's bearing just a set of inner permanent magnets being their magnetisation directions opposite for contiguous perment magnets, is used for the "radial gap part" of the bearing.

Using permanent magnets, being their magnetisation direction opposite between contiguous permanent magnets, as magnetic generators to create quadrupolar magnetic fields has demonstrated to improve the performance of superconducting magnetic bearings. There can be found papers and patents related to radial gap bearings where a single set of permanent magnets, being their magnetisation direction opposite for contiguous permanent magnets, is provided inside or outside a superconducting body that traps the magnetic field. In 2012, Werfel et al. in a paper entitled "Superconducting bearings, flywheels and transportation" presented a high-gradient bearing composed of an inner rotor with an inner set of permanent magnets, being their magnetisation direction opposite for contiguous permanent magnets, and a stationary set of superconducting bulks surrounding the inner rotor. The combination of permanent magnets facing the same poles between contiguous permanent magnets generates a quadrupole that contributes to the enhancement of the performance of the bearing. Similar results were reported in a paper published in 2002 by Kummeth et al. entitled "Development of superconducting magnetic bearings". In US6831384 (B2) a similar radial gap bearing is claimed. The possibility to fill the gap between contiguous permanent magnets using a flux guiding material (or flux collector) for the configurations presented in that patent is also claimed. Similar bearing structures have been claimed in DE102010034258 (A1), US7466051 (B2) or WO2011/048019 (A1), US2002071882 (A1), US5831361 (A) or JPH0681845 (A).

For the foregoing patents and papers, only a single inner or outer set of quadrupoles are used to generate a high-gradient magnetic field intended to enhance the performance of the bearing. On the contrary, the radial gap bearing claimed in the present invention comprises concentrically-aligned inner and outer sets of permanent magnets and at least one superconducting body between said sets. Further, the permanent magnets in the said sets present a magnetisation direction opposite for contiguous permanent magnets. In addition, the permanent magnets present symmetric magnetisation under rotation of the bearing. The interaction between the quadrupoles in the inner and outer sets of the present invention generates a complex magnetic field with a polar order higher than those in all the previously cited inventions and papers. This higher polar order configuration increases the magnetic field density and the magnetic field gradient with respect to a quadrupolar magnetic field.

Note that the previously cited JPH0544728 (A) claimed for a drive device able to transmit torque and force -therefore substantially different from a bearing- provided with an inner and an outer movable gears composed of sets of axially magnetised segments that created quadrupolar magnetic fields (all magnetisation directions are parallel within a set of segments). Note that no rotational symmetry of the magnetic field applies for this drive device.

### Summary of the invention

It is the object of this invention to provide a non-contact superconducting magnetic bearing structure with enhanced load capability, enhanced axial and radial stiffness, reduced coefficient of friction and reduced volume of superconducting material and the associated reduced cost.

The superconducting bearing of the present invention is provided with an inner set and one or more outer sets of magnetic field generators (preferredly permanent magnets), their magnetisation directions being opposite for contiguous magnetic field generators within the said sets. A superconducting body is provided between the said sets of magnetic field generators, intended to trap the magnetic field produced by the magnetic field generators. This magnetic field generated by the said inner and outer sets is characterized by being a high-order multipolar magnetic field. This high-order multipolar magnetic field enhances the magnetic field gradient and the magnetic flux density applied to the superconducting bodies which highly improves the performance of the bearing in terms of load capability and stiffness. This improvement also involves a reduction of the amount of superconducting material required with respect to the radial gap superconducting magnetic bearings cited in the previous section.

In a superconducting magnetic bearing, the superconducting body is typically the most expensive part of the device. Furthermore, the cost of cooling also scales with the amount of superconducting material. Therefore, the lower the volume of superconducting material, the lower the cost of the whole superconducting magnetic bearing.

The non-contact bearing structure of the present invention comprises
a) A rotor provided with a combination of sets of permanent magnets so there are one an inner set and at least one outer set (concentrically aligned) of permanent magnets axially magnetised, being their magnetisation directions opposite for contiguous permanent magnets in the said sets and with symmetry under rotation.
b) A stator provided with at least a superconducting body, comprising at least one superconducting part, to trap the magnetic field generated by the magnetic field created by the magnetic field generators. These superconducting bodies are located between said concentric sets of permanent magnets in the rotor.

Other embodiments of the present invention can be obtained by kinematic inversions, as for example being the said inner and outer sets part of the stator and the said superconducting bodies part of the rotor of the bearing.

In other embodiments of this invention, additional superconducting materials can be located in the innermost and/or outermost parts of the bearing in order to, for example, improve the magnetic shielding of the bearing.

### Brief description of the drawings

Fig. 1 is a schematic sectional view of a preferent embodiment of the superconducting magnetic bearing of the present invention.
Fig. 2 is a schematic cross section with plotted magnetic field lines of an embodiment of the present invention with the north poles of the inner and outer sets of permanent magnets are on the same planes.
Fig. 3 is a schematic cross section with plotted magnetic field lines of another embodiment of the present invention with the north poles of the inner set and the south poles of the outer set of permanent magnets are on the same planes.
Fig. 4 is a schematic sectional view of another preferent embodiment of the superconducting magnetic bearing of the present invention provided with an outermost superconducting body for magnetic shielding.

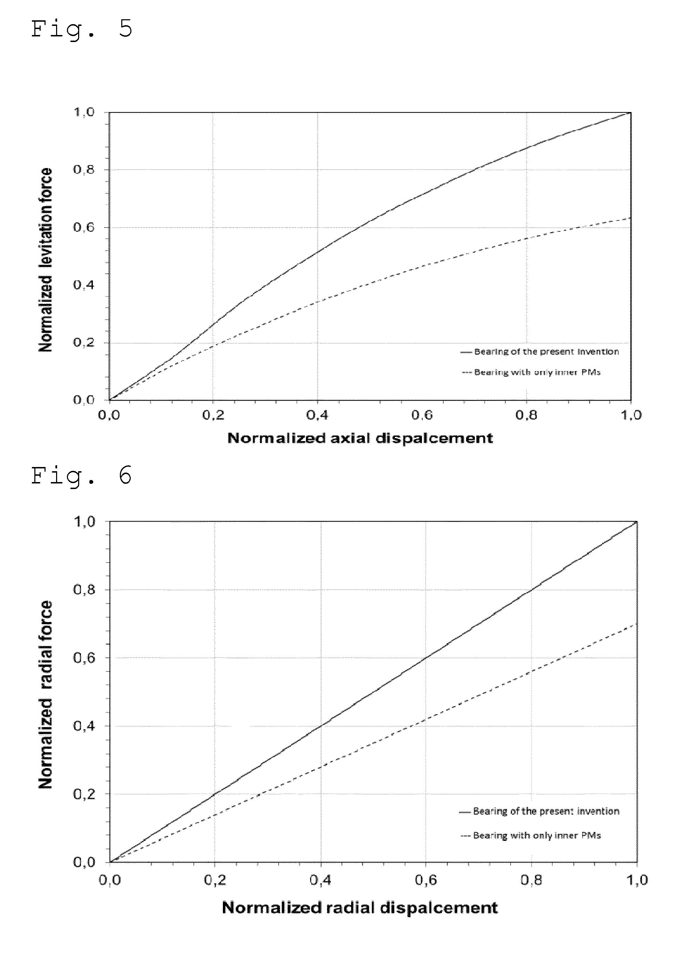

Fig. 5 graphs the axial force vs. axial displacement for a bearing according to the embodiment of present invention shown in Figs. 1 and 2 (continuous line) and for an equivalent radial gap bearing with only an inner set of permanent magnets (dashed line).
Fig. 6 graphs the radial force vs. radial displacement for a bearing according to the embodiment of present invention shown in Figs. 1 and 2 (continuous line) and for an equivalent radial gap bearing with only an inner set of permanent magnets (dashed line).

### Description of preferred embodiments

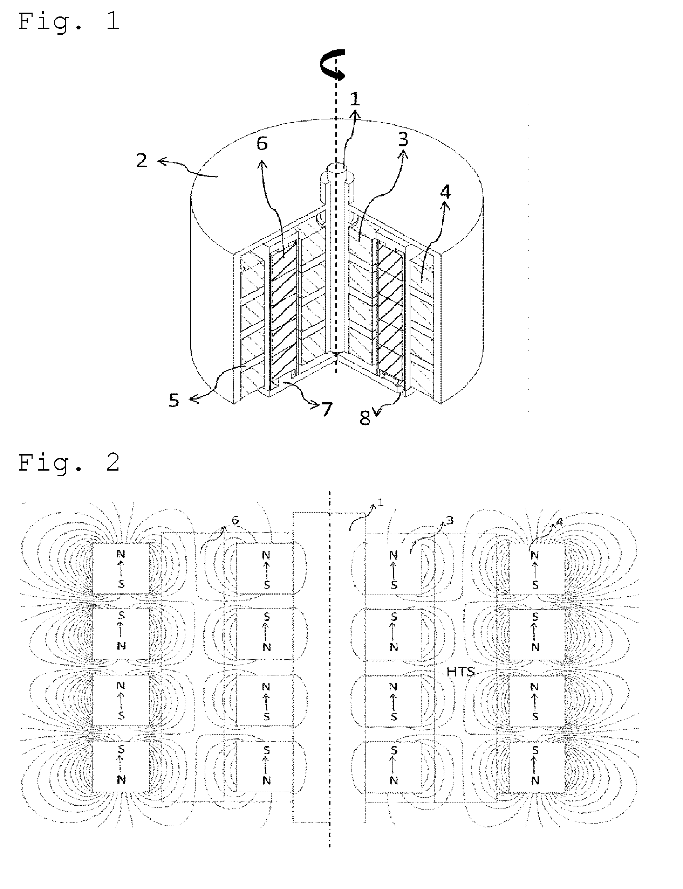

A preferred embodiment of the superconducting magnetic bearing of the present invention, as shown in Fig.1, is provided with a rotor (2) firmly joined to a rotating member, typically a shaft (1). Said rotor (2) is provided with an inner set of axially magnetised ring permanent magnets (3) being their magnetisation directions opposite for contiguous permanent magnets and with symmetry under rotation of the bearing. The rotor (2) also comprises an outer set (4) of ring permanent magnets axially magnetised being their magnetisation directions opposite for contiguous permanent magnets and with symmetry under rotation, being the outer set (4) concentric with the inner set of permanent magnets (3).

The preferred embodiment in Fig. 1 also includes a stator provided with a set of superconducting rings (6). The stator (6) is located between the inner and outer sets of permanent magnets (3, 4) in the rotor. Preferred superconducting materials are ReBaCuO and specifically, YBa₂Cu₃Ox. In order to contain the coolant that may be required to achieve the working temperature of the superconductor, the embodiment is provided with a housing or vessel (7) with a plurality of coolant intakes (8).

The preferred embodiment in Fig. 1 is also provided with a set of spacers (5) between contiguous permanent magnets within a set, being mainly made of a magnetisable material as for example ferrite or steel. In a preferred embodiment particularly easy to manufacture these spacers are a plurality of steel washers. They act as flux collectors improving the characteristics of the magnetic field applied to the superconducting bodies.

In a preferred embodiment the north poles of the said permanent magnets in the inner and outer sets (3,4) are contained in the same planes as shown in Fig. 2.

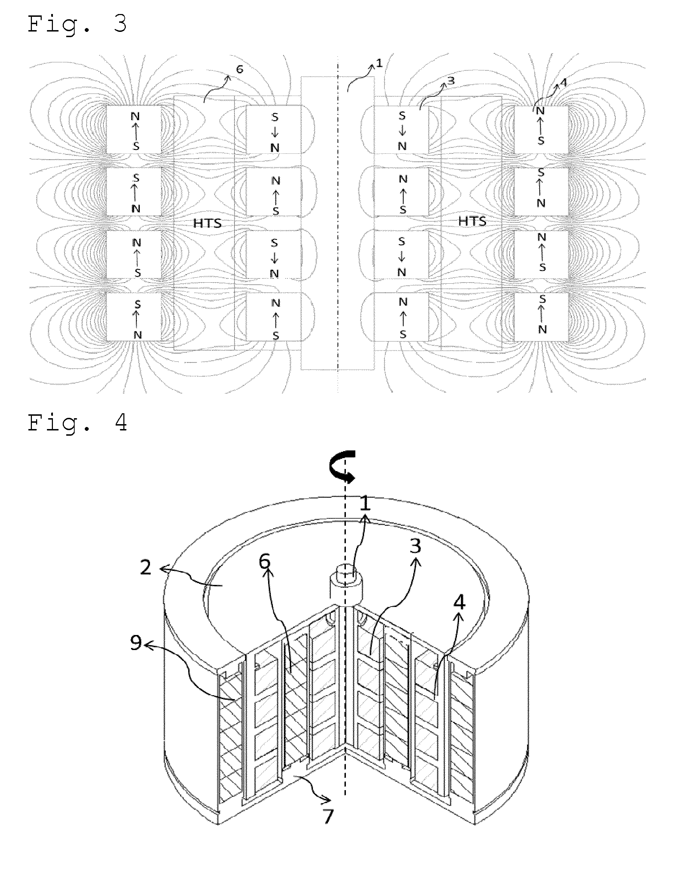

In another embodiment of the present invention, the north poles of the said permanent magnets in the inner set (3) and the south poles in the outer set (4) are contained in the same planes as shown in Fig. 3.

Other embodiments of this invention can include a plurality of outer sets of permanent magnets or magnetic field generators and/or a plurality of superconducting bodies between the said sets.

Additionally, a preferred embodiment of the present invention is also provided with an outermost and/or an innermost superconducting body. Fig. 4 shows an embodiment with such an outermost superconducting body (9) -improving the magnetic shielding and the load capabilities.

In other embodiments of the present invention, the condition of rotor and stator can be exchanged, so that the superconducting body becomes the rotor and the sets of magnets become the stator of the bearing.

### Patent documents cited in the description

- EP 0559839 (B1),
- EP 0728956 (B1)
- WO 95/32541
- US 6831384 (B2)
- DE102010034258 (A1),
- US 7659646 (B2),
- US 7466051 (B2)
- WO 2011/048019 (A1)
- US2002071882 (A1)
- US5831361 (A)
- JPH0681845 (A)
- JPH0544728 (A),

## Claims

1. A non-contact bearing structure comprising
a) A rotor provided with
a.1) An inner set of two or more permanent magnets axially magnetised with symmetry under rotation, their magnetisation direction being opposite between contiguous permanent magnets.
a.2) An outer set of two or more ring permanent magnets axially magnetised with symmetry under rotation, their magnetisation direction being opposite between contiguous permanent magnets and being the outer set concentrically aligned with the said inner set of permanent magnets.
b) A stator located between said inner and outer sets of permanent magnets of the rotor, provided with at least a superconducting part.

2. A non-contact bearing structure comprising
a) A stator provided with
a.1) An inner set of two or more permanent magnets axially magnetised with symmetry under rotation, their magnetisation direction being opposite between contiguous permanent magnets.
a.2) An outer set of two or more ring permanent magnets axially magnetised with symmetry under rotation, their magnetisation direction being opposite between contiguous permanent magnets and being the outer set concentrically aligned with the said inner set of permanent magnets.
b) A rotor located between said inner and outer sets of permanent magnets of the stator, provided with at least a superconducting part.

3. A bearing structure according to claims 1 or 2 also comprising
a) A plurality of outer sets of two or more permanent magnets axially magnetised with symmetry under rotation, their magnetisation direction being opposite between contiguous permanent magnets and being the outer sets concentrically aligned with the said inner set of permanent magnets.
b) A plurality of superconducting bodies, comprising each of them at least a superconducting part, located between two of the sets of permanent magnets.

4. A bearing structure according to any of the previous claims being the magnets of the outer set or sets **characterized by** being their north poles on the same planes as the north poles of the corresponding magnets of the inner set.

5. A bearing structure according to any of the previous claims where the permanent magnets in the said inner set are ringshaped and where at least a superconducting part is located inside the hole of the inner set of permanent magnets.

6. A bearing structure according to any of the previous claims where there is at least one superconducting part surrounding, at least partially, the outermost set of permanent magnets.

7. A bearing structure according to any claim from 1 to 6 where one or more magnetic field generators are used in place of at least one of the permanent magnets.

8. A bearing structure according to claim 7 where at least one of the said magnetic field generators is a superconducting magnet.

9. A bearing structure according to claims 7 or 8 where at least one of the said magnetic field generators is a persistent current.

10. A bearing structure according to any of the claims from 7 to 9 where at least one of the said magnetic field generators is an electromagnet.

11. A bearing structure according to any of the previous claims where the preferred superconducting material is ReBa2Cu3Ox/Ag where Re represents a rare-earth chemical element like Yttrium (Y), Lanthanum (La) or Samarium (Sm).

12. A bearing structure according to any of the claims from 1 to 11 where there is at least one spacer mainly composed of a magnetisable material placed between two contiguous permanent magnets in a set.

13. A bearing structure according to any previous claim where cooling means are provided for refrigeration of the superconductors.
